Europäisches Patentamt

European Patent Office

Office européen des brevets

(11) Veröffentlichungsnummer: **0 557 474 B1**

## EUROPÄISCHE PATENTSCHRIFT

(45) Veröffentlichungstag der Patentschrift: **27.09.95**

(21) Anmeldenummer: **92916949.8**

(22) Anmeldetag: **08.08.92**

(86) Internationale Anmeldenummer:
**PCT/EP92/01812**

(87) Internationale Veröffentlichungsnummer:
**WO 93/06341 (01.04.93 93/09)**

(51) Int. Cl.6: **F01D 11/08**, C23C 16/04,
B22F 3/26

(54) **EINLAUFBELAG FÜR EINE STRÖMUNGSMASCHINE UND HERSTELLUNGSVERFAHREN.**

(30) Priorität: **18.09.91 DE 4130946**

(43) Veröffentlichungstag der Anmeldung:
**01.09.93 Patentblatt 93/35**

(45) Bekanntmachung des Hinweises auf die
Patenterteilung:
**27.09.95 Patentblatt 95/39**

(84) Benannte Vertragsstaaten:
**FR GB IT**

(56) Entgegenhaltungen:
EP-A- 0 132 735
EP-A- 0 166 940
DE-B- 1 243 881
US-A- 3 160 517

(73) Patentinhaber: **MTU MOTOREN- UND TURBI-
NEN-UNION MÜNCHEN GMBH
Postfach 50 06 40
D-80976 München (DE)**

(72) Erfinder: **MERZ, Herbert
Donauwörtherstrasse 21
D-8000 München 50 (DE)**
Erfinder: **WEILER, Wolfgang
Robert-Koch-Strasse 11
D-8060 Dachau (DE)**

(74) Vertreter: **Baum, Wolfgang, Dipl.-Ing.
MTU MOTOREN- UND
TURBINEN-UNION MÜNCHEN GMBH
Postfach 50 06 40
D-80976 München (DE)**

EP 0 557 474 B1

**Beschreibung**

Die Erfindung betrifft einen Einlaufbelag für Labyrinthdichtungen einer Strömungsmaschine insbesondere Gasturbine aus einem Schichtverbundwerkstoff mit einem Kern und einer Hülle und Einlagerungen und ein Verfahren zur Herstellung des Einlaufbelages.

Einlaufbeläge für Strömungsmaschinen sind aus EP-OS 0 166 940 bekannt. Die dort offenbarten Einlaufbeläge sollen den Radialspalt zwischen Rotorschaufeln und Gehäuse so gering wie möglich halten. Wenn gleichartige Einlaufbeläge für Labyrinthdichtungen mit beispielsweise Labyrinthspitzen auf der Rotorwelle und Einlaufbelag am Gehäuse eingesetzt werden, so besteht die Gefahr der Selbstentzündung des Einlaufbelages, da die Labyrinthspitzen wesentlich intensiver mit dem Einlaufbelag beim Einlaufen in Reibkontakt stehen als die einzelnen Schaufelspitzen eines Rotors mit dem Gehäuseeinlaufbelag.

Deshalb werden Einlaufbeläge für Labyrinthdichtungen nicht wie in EP-OS 0 166 940 offenbart, aus einem Kernmaterial aus Graphit oder Keramik hergestellt, sondern aus besser wärmeabführendem Metallfilz oder Metallgewebe ohne Umhüllungen oder Einlagerungen.

Trotz dieses Unterschieds entstehen Triebwerksausfälle durch Selbstentzündung von Einlaufbelegen aus Metallfilz oder Metallgewebe an Labyrinthdichtungen. Dabei kommt es zu lokalen Überhitzungen des Metallfilzes oder Metallgewebes durch intensiven Reibkontakt mit den Labyrinthspitzen und infolge dessen zu exothermen Reaktionen zwischen verdichtetem, heißem Luftsauerstoff (0,4 bis 1 MPa bei 280 bis 600 °C) und der großen spezifischen oxidierbaren Metalloberfläche des Metallfilzes bzw. Metallgewebes. Die Verbrennungsgeschwindigkeit ist dabei größer als die Wärmeabfuhr, so daß die Dichtungskonstruktion explosionsartig zerstört wird. Dabei kann es auch zu partieller Verschweißung von Einlaufbelagsmaterial mit dem Rotor kommen.

Aufgabe der Erfindung ist es, einen gattungsgemäßen Einlaufbelag mit verbesserten Anlauf- und Einschleifeigenschaften anzugeben, bei dem eine exotherme Reaktion eingedämmt wird und die Wärmeleitungseigenschaften verbessert werden.

Gelöst wird die Aufgabe erfindungsgemäß dadurch, daß der Kern aus einem verfilzten oder dreidimensional vernetzten Faserkörper aus Eisen-, Nickel- oder Kobaltbasislegierungen und die Hülle aus einem oder mehreren Edelmetallen oder Edelmetalllegierungen besteht und jeder Metallkern von dem Hüllmaterial umgeben ist und die Einlagerungen aus oxidationsbeständigen Gleitmaterialien aus der Gruppe der Oxide, Karbide oder Nitride mit hexagonaler Kristallgitterschichtstruktur bestehen.

Diese Lösung hat den Vorteil, daß der Kern aus einer Eisen-, Nickel- oder Kobaltlegierung die nötige Festigkeit liefert, um einen formgetreuen Einlaufbelag zu bilden. Die Edelmetallhülle weist eine höhere Oxidationsbeständigkeit auf, als das formstabile Kernmaterial und begrenzt und behindert die Ausbreitung einer exothermen Reaktion durch die oxidationsbeständige Sperrschicht. Der Faserkörper kommt lokal zum Glühen und partiell auch zum Schmelzen, so daß sich die Dichtung einschleift, aber eine explosionsartige Ausbreitung der Verbrennung wird verhindert. Gleichzeitig vergrößert die Edelmetallhülle die Wärmeabfuhr, da edle Metalle aufgrund ihrer höheren Elektronenbeweglichkeit eine höhere Wärmeleitung zeigen als unedle Metalle.

Einlagerungen haben bei herkömmlichen Einlaufbelägen für Schaufeln die Aufgabe, die metallischen Schaufelspitzen einzuschleifen und bestehen deshalb aus Korund oder anderen harten Schleifpartikeln. Bei Labyrinthdichtungen würden derartige Schleifpartikel die metallischen Spitzen der Labyrinthdichtungen abarbeiten und die Leckrate vergrößern. Die erfindungsgemäßen Einlagerungen aus oxidationsbeständigen Gleitmaterialien aus der Gruppe der Oxide, Karbide oder Nitride mit hexagonaler Kristallgitterschichtstruktur haben den Vorteil, daß sich die hexagonalen Kristallgitterschichten, weil es keine hexagonaldichtesten Kugelpackungen sind, gleitend verschieben können und damit die Spitzen der Labyrinthdichtungen nicht abrasiv belasten.

Bei einer bevorzugten Ausbildung der Erfindung besteht der Faserkörper aus Metalldraht, -fasern oder -spänen. Diese können je nach Vernetzungsart von kleiner oder großer Länge sein. Je nach Faserform und Faserart werden unterschiedliche Herstellverfahren zur Bildung eines Faserkörpers vorteilhaft eingsetzt. Aus endlosgezogenen Fasern von ca. 1 bis 50 $\mu$m Durchmesser lassen sich zweidimensionale kreuzlagengewikkelte zylindrische Schichten, herstellen, die anschließend durch Diffusionskontaktsintern oder Diffusionsglühen an den Kreuzungspunkten der Faserwicklung zu einem Faserkörper vernetzt werden. Die endlosgezogenen Fasern eignen sich aber auch, um Nadelfilze herzustellen oder dreidimensionale Gestricke, Gewirke oder Gewebe zu bilden. Lang- und Kurzfaserspäne können zu Nadelfilz verarbeitet werden, der sich für eine dreidimensionale Vernetzung mittels Diffusionskontaktsintern oder Diffusionsglühen zu einem Faserkörper besonders eignet.

Galvanisch auf Baumwoll- oder Kohlefasern abgeschiedene Metallfasern, -fäden oder -drähte konnenwie Metallspäne zu Faserkörpern verarbeitet werden.

2

Als Material für Metalldrähte und -fasern oder -späne werden Eisen oder Eisenbasislegierungen, Nickel oder Nickelbasislegierungen oder Kobalt oder Kobaltbasislegierungen verwandt.

Ein wesentlicher Vorteil von Metalldraht, -fasern oder -spänen ist, daß der Faserkörper eine große Anfangsporosität aufweist, so daß für Einlagerungen ein großes Porenvolumen zur Verfügung steht.

In einer weiteren bevorzugten Ausbildung der Erfindung weist der Faserkörper ebene gewirkte, gestrickte, gewebte, geknüpfte oder gewickelte, zweidimensionale Faserschichten auf, die in der dritten Dimension durch Diffusionkontaktsintern oder Diffusionsglühen oder durch Wirken, Häkeln, Steppen oder Nähen vernetzt sind. Das hat den Vorteil, daß der Faserkörper beim Einschleifen der Labyrinthspitzen nicht schichtweise abgetragen werden kann, so daß sich keine großflächigen Fremdpartikel beim Einlaufen abschälen und damit die Funktion eines Triebwerkes beeinträchtigen können.

Für die Hülle des Faserkerns wird vorzugsweise als Edelmetall Platin, Rhodium, Gold oder Legierungen dieser Elemente eingesetzt. Diese oxidationsbeständigen und wärmeleitenden Metalle haben den Vorteil, daß sie sehr gleichmäßig und kostengünstig in den Faserkörper zur Umhüllung der Metalldrähte, -fasern oder -späne einbringbar sind.

Eine bevorzugte Einlagerung besteht aus Partikeln aus hexagonalem Bornitrid. Das hexagonale Bornitrid verbessert das Reib- und Anstreifverhalten zusätzlich, wenn es als Einlagerung in den Einlaufbelag vor, während oder nach der Formgebung des Einlaufbelages eingebracht wird. Pyrolytisch abgeschiedenes $\alpha$-Bornitrid hat eine hexagonale Kristallgitterschichtstruktur und ist nicht nur äußerst oxidationsbeständig, sondern hat auch einen Reibkoeffizienten wie Graphit. Es reagiert nicht mit den meisten schmelzflüssigen Metallen und wird nicht benetzt und ist weich wie Talkum. Da es eine beachtliche Wärmeleitfähigkeit besitzt, vermindert es den Anstieg der Temperatur des Einlaufbelags, wenn die Poren des Faserkörpers mit $\alpha$-Bornitrid aufgefüllt sind. Der Temperaturanstieg wird außerdem durch die Herabsetzung des Reibkoeffizienten des Einlaufbelages durch das weiche Bornitrid vermindert.

Die Aufgabe, ein Verfahren zur Herstellung des gattungsgemäßen Einlaufbelages anzugeben, wird dadurch gelöst, daß zunächst das Kernmaterial mit einem oder mehreren Edelmetallen oder deren Legierungen beschichtet wird, anschließend die Zwischenräume oder Poren des Faserkörpers ganz oder teilweise mit Einlagerungen gefüllt werden, so daß ein Rohfaserkörper entsteht, der anschließend zu einem Einlaufbelagsrohling verarbeitet und schließlich zu einem Einlaufbelag verpreßt wird.

Diese Abfolge von Verfahrensschritten hat den Vorteil, daß bis zur Fertigstellung des Einlaufbelages qualitätssichernde Zwischenprodukte wie ein beschichtetes Kernmaterial nach einem Edelmetallbeschichtungsschritt, ein Rohfaserkörper nach einem Einbringvorgang für Einlagerungen, ein Einlaufbelagsrohling nach einem Bearbeitungs- und Formgebungsschritt und schließlich nach einem Pressvorgang der Einlaufbelag gefertigt werden. Jedes Zwischenprodukt kann einer eigenen Qualitätsprüfung unterworfen werden, um vorteilhaft die Güte des Endproduktes zu sichern. So ermöglicht dieses Verfahren nach dem Edelmetallbeschichtungsschritt die Vollständigkeit der Umhüllung des Kernmaterials und die Dicke der Edelmetallumhüllung festzustellen. Nach der Einlagerung von Gleitmaterialien kann der Füllgrad der Poren und das verbleibende Porenvolumen am Rohfaserkörper geprüft werden. Nach dem Bearbeitungs- und Formgebungsschritt kann die Maßgenauigkeit des Einlaufbelagsrohling gemessen werden und das Schrumpfmaß für einen Verdichtungsschritt durch Pressen festgelegt und damit die Maßgenauigkeit des Einlaufbelags gesichert werden. Ein Nachbearbeiten des verpreßten Einlaufbelags ist ebenfalls nach einem Qualitätssicherungsschritt möglich.

Die Herstellung hat den weiteren Vorteil, daß sie äußerst wirtschaftlich ist, da als Kernmaterial handelsübliche Qualitäten, wie sie Tabelle 1 mit Handelsnamen und chemischer Zusammensetzung zeigt, einsetzbar sind und die mittels des erfindungsgemäßen Verfahrens veredelt werden.

TABELLE 1

Typische chemische Zusammensetzung von handelsüblichen
Metallfaserlegierungen als Kernmaterial

| Handels-name: | Ni | Co | Cr | Mo | W | Fe | C | Si | Mn | Al | Y | Ti |
|---|---|---|---|---|---|---|---|---|---|---|---|---|
| Hastelloy X | Basis | 1-2 | 20-25 | 8-10 | 0,5-1 | 16-20 | <0,15 | 0,5-1 | 0,5-1 | | | |
| Haynes 188 | 18-25 | Basis | 18-25 | | 12-15 | 1-2 | <0,15 | 0,1-0,3 | 0,5-1 | | | |
| FeNiCrAlY Brunslloy 53 X | 22-28 | 0,3-1 | 16-22 | | | Basis | <0,1 | <0,2 | | 7-12 | <0,1 | |
| Cr-Ni Stahl US-Typ304/404 | 8-12 | | 16-20 | 1-3 | | Basis | <0,1 | 0,5-1 | | | | <0,5 |

Eine weitere bevorzugte Durchführung des Verfahrens besteht darin, daß zunächst das Kernmaterial zu einem unbeschichteten Rohfaserkörper verarbeitet und anschließend zu einem Einlaufbelagsrohling verpreßt oder diffusionsverbunden wird und anschließend ein Edelmetallbeschichten mittels galvanischer-, CVD- oder Plasma-Abscheidung erfolgt und abschließend Einlagerungen eingebracht werden.

Dieser Verfahrensablauf hat den Vorteil, daß vor dem Edelmetallbeschichten bereits ein relativ kompakter Rohfaserkörper vorliegt, dessen große Anzahl von Faserkreuzungsstellen mit der Edelmetallbeschichtung fixiert wird, wodurch eine verbesserte 3-dimensionale Bruchfestigkeit erzielt wird.

Die Korngröße des Einlagerungsmaterials ist trotz der Verdichtung immer noch klein gegen die Porengröße des kompaktierten Rohfaserkörpers, so daß eine ausreichende Konzentration von Einlagerungsmaterial erreicht werden kann.

Zur Einbringung von hexagonalem Bornitrid als Einlagerungsmaterial wird vorzugsweise nach dem Beschichten des Kernmaterials mit Edelmetallen ein Durchtränken des Faserkörpers mit einer Aufschlämmung von Partikeln aus hexagonalem Bornitrid in einer Trägerflüssigkeit durchgeführt. Nach Verdampfen oder Lufttrocknen der Trägerflüssigkeit verbleiben hexagonale Bornitridpartikel in den Poren des Faserkörpers. Der damit entstandene Rohfaserkörper kann anschließend zu einem Einlaufbelagsrohling verarbeitet und schließlich zu einem Einlaufbelag durch Pressen verdichtet werden.

Die folgenden Beispiele sind bevorzugte Ausführungen der Erfindung.

Beispiel 1    beschreibt einen Einlaufbelag aus Metalldrähten mit Rhodiumbeschichtung und hexagonalen Bornitrid Einlagerungen und seine Herstellung.

Beispiel 2    beschreibt einen Einlaufbelag und seine Herstellung aus Metallspänen.

Beispiel 1 beschreibt einen Einlaufbelag aus Metalldrähten mit Rhodiumbeschichtung und hexagonalen Bornitrid Einlagerungen und seine Herstellung. Aus einem endlosen Hastelloy X-Draht (vgl . Tabelle 1) wird ein Schlauch mit einem Durchmesser von ca. 120 mm gewirkt. Der Schlauch wird über eine zylindrische Hilfsform in sich aufgerollt, bis ein benötigtes Rohdichtungsvolumen für einen Einlaufbelag erreicht ist. Das Rohdichtungsvolumen ist dabei wesentlich größer als das Endteil des fertigen Einlaufbelages.

Das zylindrische Rohteil wird bis zum annähernd doppelten Endteilvolumen vorverdichtet, wobei gleichzeitig oder nachgeschaltet eine dreidimensionale Diffusionsvernetzung durch Diffusionskontaktsintern oder Diffusionsglühen durchgeführt werden kann.

EP 0 557 474 B1

Das verdichtete Rohteil wird zur Entfernung von Verunreinigungen und Oxidschichten in der folgenden Lösung aus folgenden Chemikalien gebeizt:

a) ca, 300 ml $HNO_3$ einer Konzentration von 1,41 $g/cm^3$

b) ca. 35 ml HF einer Konzentration von 1,26 $g/cm^3$

c) ca. 1.000 ml $H_2O$.

Das Rohteil wird für ca. 30 s in die obige Beizlösung, die auf etwa 50 °C gehalten wird, getaucht. Nachfolgend wird das Rohteil mehrfach in heißem Wasser gespült.

Danach werden die Metalldrähte des verdichteten Rohteils vollständig mit Rhodium umhüllt. Dazu wird das verdichtete Rohteil in ein Galvanikbad folgender Zusammensetzung getaucht:

a) 2 bis 10 g/l Rhodium-komplexsulfat

b) 5 bis 50 ml/ l konzentrierte Schwefelsäure

c) 10 bis 100 g/l Magnesiumsulfamat

d) 5 bis 50 g/l Magnesiumsulfat

und eine Stromdichte von 0,5 bis 2 $A/dm^2$ für 0,5 bis 8 Stunden bei einer Raumterperatur von 20 bis 50 °C eingestellt. Dabei bildet sich auf dem Hastelloy X-Draht eine Edelmetallschicht aus Rhodium von ca. 1 bis 10 $\mu m$ Dicke. Nach Spülvorgängen in Heißwasser und einem Heißlufttrocknen des beschichteten Faserkörpers wird dieser auf einen Dichtungsträger aufgelötet. Anschließend wird dieses beschichtete Rohteil durch Einbringen von Bornitridpartikeln zu einem Einlaufbelagsrohling verarbeitet. Dazu wird das Rohteil in eine Aufschlämmung aus:

a) 5 bis 10 Vol% hexagonalem $\alpha$-Bornitrid

b) 3 bis 8 Gew% anorganischem Silikat-Binder

c) Rest destilliertem Wasser

mehrfach getränkt und getrocknet. Schließlich wird der Einlaufbelagsrohling in eine endgültige Form zu einem Einlaufbelag gepreßt und bei Temperaturen zwischen 60 und 150 °C getrocknet.

Beispiel 2 beschreibt einen Einlaufbelag und seine Herstellung aus Metallspänen. Dazu werden spanabhebend metallische Kurzfasern aus einem der Werkstoffe der Tabelle 1 hergestellt, verfilzt und unter Diffusionskontaktsintern oder Diffusionsglühung auf eine Dichte von etwa 10 bis 25 % der theoretischen Dichte des Metalls zu einem plattenförmigen Faserkörper vorgepreßt. Diese Rohplatte wird wie im Beispiel 1 gebeizt und nach Reinigung und Trocknung mit einer organometallischen Lösung für das Abscheiden von Platin oder Rhodium getränkt und getrocknet.

Mit einem Erhitzen in mehreren Stufen auf 650 bis 800 °C scheidet sich eine Platin- oder Rhodium- oder Platin/Rhodium-Beschichtung des Faserkörpers aus der organometallischen Verbindung ab. Die Edelmetall-beschichteten Platten werden zertrennt und durch Biegen, Rollen, Walzen oder Pressen zu Faserkörperrohlingen geformt und in Dichtungstrageteile eingelötet.

Nach dem Einlöten erfolgt eine Imprägnierung des Faserkörperrohlings mit einer Aufschlämmung von hexagonalen Bornitrid-Partikeln wie in Beispiel 1 zu einem Einlaufbelagsrohling und abschließend eine Formpressung zum Einlaufbelag.

## Patentansprüche

1. Einlaufbelag für Labyrinthdichtungen einer Strömungsmaschine insbesondere Gasturbine aus einem Schichtverbundwerkstoff mit einem Kern und einer Hülle und Einlagerungen, dadurch gekennzeichnet, daß der Kern aus einem verfilzten oder dreidimensional vernetzten Faserkörper aus Eisen-, Nickel- oder Kobaltbasislegierungen und die Hülle aus einem oder mehreren Edelmetallen oder Edelmetallegierungen besteht und jeder Kern von dem Hüllmaterial vollständig umgeben ist und die Einlagerungen aus oxidationsbeständigen Gleitmaterialien aus der Gruppe der Oxide, Karbide oder Nitride mit hexagonaler Kristallgitterschichtstruktur bestehen.

2. Einlaufbelag nach Anspruch 1, dadurch gekennzeichnet, daß der Faserkörper aus Metalldraht, -fasern oder -spänen besteht.

3. Einlaufbelag nach Anspruch 1 oder 2, dadurch gekennzeichnet, daß der dreidimensional vernetzte Faserkörper ebene gewirkte, gestrickte, gewebte, geknüpfte oder gewickelte zweidimensionale Faserschichten aufweist, die in der dritten Dimension durch Diffusionskontaktsintern oder Diffusionsglühen oder durch Wirken, Häkeln, Steppen oder Nähen vernetzt sind.

4. Einlaufbelag nach einem der Ansprüche 1 bis 3, dadurch gekennzeichnet, daß die Hülle aus Platin, Rhodium, Gold oder Legierungen dieser Elemente ist.

5

**5.** Einlaufbelag nach einem der Ansprüche 1 bis 4, dadurch gekennzeichnet, daß das Material der Einlagerungen aus hexagonalem Bornitrid besteht.

**6.** Verfahren zur Herstellung des Einlaufbelags nach einem der Ansprüche 1 bis 3, dadurch gekennzeichnet, daß zunächst das Kernmaterial mit einem oder mehreren Edelmetallen oder deren Legierungen beschichtet wird, anschließend die Zwischenräume oder Poren des Faserkörpers ganz oder teilweise mit Einlagerungen gefüllt werden, so daß ein Rohfaserkörper entsteht, der anschließend zu einem Einlaufbelagsrohling verarbeitet und schließlich zu einem Einlaufbelag verpreßt wird.

**7.** Verfahren nach Anspruch 6, dadurch gekennzeichnet, daß zunächst das Kernmaterial zu einem unbeschichteten Rohfaserkörper verarbeitet und danach zu einem Einlaufsbelagsrohling verpreßt oder diffusionsverbunden wird und anschließend ein Edelmetallbeschichten mittels galvanischer-, organometallischer-, CVD- oder Plasma-Abscheidung erfolgt und vor oder nach der Abscheidung auf dem Dichtungsträger Einlagerungen eingebracht werden.

**8.** Verfahren nach Anspruch 6 oder 7, dadurch gekennzeichnet, daß nach dem Beschichten des Kernmaterials mit Edelmetallen zum Einbringen der Einlagerungen ein Durchtränken des Faserkörpers mit einer Aufschlämmung von Partikeln aus hexagonalem Bornitrid in einer Trägerflüssigkeit erfolgt.

**Claims**

**1.** A run-in lining for labyrinth seals of a turbo-machine, in particular a gas turbine, comprising a laminated composite having a core and a covering and intermediate layers, characterised in that the core comprises a felted or three-dimensionally cross-linked fibrous body made of iron-, nickel-or cobalt-based alloys and the covering comprises one or more noble metals or noble-metal alloys and each core is completely surrounded by the covering material and the intermediate layers comprise oxidation-resistant sliding materials from the group of oxides, carbides or nitrides having a hexagonal crystal-lattice layer structure.

**2.** A run-in lining according to claim 1, characterised in that the fibrous body comprises metal wire, metal fibres or metal chips.

**3.** A run-in lining according to claim 1 or 2, characterised in that the three-dimensionally cross-linked fibrous body has flat worked, knitted, woven, knotted or wound two-dimensional fibrous layers which are cross-linked in the third dimension by diffusion contact sintering or homogenising or by knitting, crocheting, stitching or sewing.

**4.** A run-in lining according to any one of claims 1 to 3, characterised in that the covering is made of platinum, rhodium, gold or alloys of these elements.

**5.** A run-in lining according to any one of claims 1 to 4, characterised in that the material of the intermediate layers comprises hexagonal boron nitride.

**6.** A method of manufacturing the run-in lining according to any one of claims 1 to 3, characterised in that first the core material is coated with one or more noble metals or alloys thereof, and then the interstices or pores of the fibrous body are completely or partly filled by intermediate layers, thereby producing a crude fibrous body which is then processed to form a run-in lining blank and finally compressed to form a run-in lining.

**7.** A method according to claim 6, characterised in that first the core material is processed to form an uncoated crude fibrous body and is subsequently compressed or diffusion-bonded to form a run-in lining blank, and then noble-metal coating is carried out by means of electrodeposition, organometallic, chemical vapour or plasma deposition and intermediate layers are applied to the seal base before or after deposition.

**8.** A method according to claim 6 or 7, characterised in that, after the core material has been coated with noble metals, the fibrous body is impregnated with a suspension of particles of hexagonal boron nitride in a carrier liquid for the application of the intermediate layers.

**Revendications**

1. Garniture de rodage pour des joints d'étanchéité en labyrinthe d'une machine à fluide en particulier d'une turbine à gaz, formée d'un matériau composite stratifié avec un noyau et une enveloppe ainsi que des inserts, garniture caractérisée en ce que le noyau est formé d'un corps de fibres en feutre ou réticulées tridimensionnel, comprenant des alliages de fer, nickel et de cobalt et l'enveloppe est composée d'un ou plusieurs métaux nobles ou d'alliage de métaux nobles et chaque noyau est entouré complètement par la matière d'enveloppe et les inserts sont des matières lubrifiantes résistant à l'oxydation, choisies dans le groupe des oxydes, carbures ou nitrures à structure de couche de réseau cristallographique, hexagonale.

2. Garniture de rodage selon la revendication 1, caractérisée en ce que le corps de fibres est formé de fils de fibres ou de copeaux métalliques.

3. Garniture de rodage selon la revendication 1 ou 2, caractérisée en ce que le corps de fibres réticulées, tridimensionnel comporte des couches de fibres bidimensionnelles, planes, tricotées, tissées, nappées, nouées ou enroulées, et réticulées dans la troisième dimension par frittage de contact par diffusion ou recuit de diffusion ou encore par tricotage, crochetage, piquage ou couture.

4. Garniture de rodage selon l'une des revendications 1 à 3, caractérisée en ce que la gaine est en platine, rhodium, or, ou en des alliages de ces éléments.

5. Garniture de rodage selon l'une des revendications 1 à 4, caractérisée en ce que le matériau des inserts est du nitrure de bore hexagonal.

6. Procédé de fabrication de la garniture de rodage selon l'une des revendications 1 à 3, caractérisé en ce qu'on revêt tout d'abord le matériau du noyau avec un ou plusieurs métaux nobles ou alliages de ceux-ci, puis on remplit totalement ou partiellement les intervalles ou pores du corps de fibres avec des inserts pour obtenir un corps de fibres brutes que l'on traite pour former une ébauche de garniture de rodage et enfin on comprime pour former une garniture de rodage.

7. Procédé selon la revendication 6, caractérisé en ce que tout d'abord on traite le matériau du noyau pour former un corps de fibres brutes non revêtues, puis on comprime pour former une ébauche de garniture de rodage ou on relie par diffusion et enfin on fait un revêtement de métal noble par procédé galvanique, dépôt organométallique, dépôt à la vapeur ou au plasma et avant ou après le dépôt on introduit des inserts dans le support du joint.

8. Procédé selon la revendication 6 ou 7, caractérisé en ce qu'après revêtement du matériau du noyau avec des métaux nobles, pour introduire des inserts, on imprègne le corps de fibres avec une boue de particules de nitrure de bore hexagonal dans un liquide vecteur.